# EUROPÄISCHE PATENTSCHRIFT

(11) **EP 3 329 813 B1**
(45) Veröffentlichungstag und Bekanntmachung des Hinweises auf die Patenterteilung: **20.05.2020**
(21) Anmeldenummer: 17205078.3
(22) Anmeldetag: 04.12.2017
(51) Int. Cl.: A47J 37/10, A47J 45/07, A47J 45/10, A47J 37/06

(54) **GRILLPFANNE**
GRIDDLE PAN
POÊLES À GRILLER

(30) Priorität: 05.12.2016 DE 202016007704 U; 20.06.2017 DE 202017003307 U
(43) Veröffentlichungstag der Anmeldung: 06.06.2018
(73) Patentinhaber: ACS Coating Systems GmbH, 26386 Wilhelmshaven (DE)
(72) Erfinder: Stecher, Christoph, 28386 Wilhelmshaven (DE)
(74) Vertreter: Philipp, Matthias

(56) Entgegenhaltungen:
- EP-A1- 2 918 204
- DE-C- 923 503
- FR-A- 975 270
- US-A1- 2008 223 860
- US-A1- 2012 055 346

## Beschreibung

Die Erfindung bezieht sich auf eine Grillpfanne mit einem rostförmig mit Grillstäben ausgebildeten Boden, wie sie in ähnlicher Form aus 2. den DE202013005417U1, EP2918204A1 und US2012/0055346A1 bekannt ist.

Bei der bekannten Grillpfanne ist der Boden mit einer Perforation versehen und als Metallgusskörper ausgebildet. Der Rand verläuft um den gesamten Boden herum.

Gleichzeitig sind symmetrische Grillrostanordnungen für die Benutzung im Ofen bekannt, die beidseitig benutzt werden können und keinen Rand aufweisen.

Der Erfindung liegt die Aufgabe zugrunde, eine bekannte Grillpfanne sowie bekannte Grillrostanordnungen im Hinblick auf eine verbesserte Bratqualität, kürzere Grillzeit und ein markanteres Branding zu verbessern. Zusätzlich soll auch kleinteiliges Gargut aufgenommen werden können ohne durchzufallen und es soll empfindliches, weiches Gargut aufgenommen werden können, ohne "einzubrechen", zum Beispiel roher Fisch. Die Benutzung soll universell erfolgen können, und zwar sowohl auf den verschiedenen Bauarten von Grills als auch im Backofen. Versuche haben gezeigt, dass bekannte Grillpfannen im Backofen praktisch kein Branding erzeugen. Ferner ist es bei diesen kaum möglich, bei Verwendung im Backofen das Gargut zu wenden oder auch nur zu beobachten, da der geschlossene Rand die Sicht und den Zugriff blockiert.

Erfindungsgemäß werden die vorgenannten Aufgaben durch eine Grillpfanne nach Anspruch ₁ gelöst.

Der lediglich über einen Teil des Umfangs des Bodens, d. h. nicht geschlossen um den Boden umlaufende Rand kann dazu dienen, einen Deckel aufzunehmen. Eine oder mehrere Öffnungen im Rand können dazu dienen, mit einem Wender besser in die Pfanne zu kommen, Grillgut auszuschütten, längliches Grillgut nach außen überhängen zu lassen oder auch dazu, Luft seitlich ein- und austreten zu lassen.

Bevorzugt sieht die Erfindung vor, dass der Boden einander kreuzende Grillstäbe umfasst, mit einer Anzahl von zueinander parallelen ersten Grillstäben und einer Anzahl von zueinander parallelen zweiten Grillstäben, die unter einem Winkel von 15° bis 90° zu den ersten Grillstäben angeordnet sind.

Ein so erzieltes "Kreuzmuster" der Grillstäbe führt zur Erzeugung eines kreuzförmigen Brandings, ohne dass das Gargut umständlich gedreht werden muss, wie das bei herkömmlichen Grillrosten der Fall ist. Außerdem ergibt sich mit dem beschriebenen Querschnittsprofil der Grillstäbe der Vorteil, dass auch empfindliches und kleinteiliges Gargut nicht durch den Rost bzw. Boden durchrutscht oder zu sehr eingedrückt wird. Bei unterschiedlich breiten oberen und unteren Auflageflächen und beiderseitiger Benutzbarkeit der Griffpfanne kann die Stärke des Brandings variiert werden.

Es kann vorgesehen sein, dass die obere Auflagefläche jedes Grillstabs eben ist, zweckmäßigerweise in einer oberen Auflageebene der Grillpfanne verläuft und eine Breite von mindestens 5%, 10%, 20%, 30%, 40% oder 50% einer Höhe des Grillstabs (gegenseitiger Abstand der Auflageflächen) oder der Dicke des Bodens aufweist. Weiterhin kann vorgesehen sein, dass die untere Auflagefläche eines jeden Grillstabs eben ist, zweckmäßigerweise in einer unteren Auflageebene der Grillpfanne verläuft und eine Breite von mindestens 5%, 10%, 20%, 30%, 40% oder 50% einer Höhe des Grillstabs (gegenseitiger Abstand der Auflageflächen) oder der Dicke des Bodens aufweist. Die Breite der oberen Auflageflächen kann sich von der der unteren Auflageflächen unterscheiden und entweder größer oder kleiner als diese sein.

Es kann vorgesehen sein, dass eine größte Breite jedes Grillstabs, in einer Richtung parallel zu den Auflageflächen gesehen, größer ist als eine Höhe des Grillstabs, und bspw. mindestens das 1,1-fache, 1,2-fache, 1,3-fache, 1,5-fache, 1,7-fache oder 2-fache davon beträgt.

Weiterhin kann vorgesehen sein, dass ein gegenseitiger Abstand benachbarter Kreuzungspunkte von Grillstäben zwischen 15 mm und 50 mm liegt. Bei einer rautenförmigen Anordnung der Grillstäbe, bei der die ersten Grillstäbe unter einem Winkel von weniger als 90° zu den zweiten Grillstäben angeordnet sind, kann ein kleinerer Abstand von benachbarten Kreuzungspunkten zwischen 15 mm und 25 mm betragen, bevorzugt 20 mm, und ein größerer Abstand von benachbarten Kreuzungspunkten kann zwischen 30 mm und 50 mm betragen, bevorzugt 40 mm.

Es kann vorgesehen sein, dass die Querschnittsbreite jedes Grillstabs ausgehend von den Auflageflächen zunimmt, insbesondere linear. Jeder Grillstab kann einen trapezförmigen oberen Querschnittsbereich mit der oberen Auflagefläche und zwei oberen Seitenflächen und einen trapezförmigen unteren Querschnittsbereich mit der unteren Auflagefläche und zwei unteren, an die oberen Seiten anschließenden Seiten aufweisen, wobei die jeweilige Basis der Querschnittsbereiche, die der Mittelposition oder einer Mittelebene entspricht, identisch ist und die beiden Querschnittsbereiche unmittelbar aneinander anschließen. Die so in dem Boden gebildeten Öffnungen können in jeder Richtung (deutlich) kleiner sein als die Abstände zwischen den Auflageflächen. Dies kann von beiden Auflageseiten gelten. Dadurch ergibt sich die Möglichkeit, kleinteiliges Gargut aufzunehmen.

Die Mittelposition kann sich mittig zwischen den Auflageebenen oder Auflageflächen befinden, oder an einer außermittigen Position von 10 % bis 90 % des gegenseitigen Abstands der Auflageebenen.

Versuche haben gezeigt, dass kleinteiliges Gemüse wie Paprikastücke und Zwiebelringe nicht durchfallen und nach kurzer Zeit das gewünschte markante Branding aufweisen. Ferner haben die Versuche gezeigt, dass mit der erfindungsgemäßen Bauform alle Lebensmittel im Backofen gegrillt werden konnten und markante Grillmuster nebst den zugehörigen Aromen erzeugt werden konnten. Dabei zeigte sich ferner, dass die Garzeiten in handelsüblichen Haushaltsbacköfen gesenkt werden. Im Vergleich zu bekannten Anordnungen konnte die Garzeit um ca. 20% gesenkt werden und es wurde ein Branding erzeugt. Die Grillpfanne wurde dazu einfach auf einen üblichen Drahtrost gestellt, der in der oberen Mitte des Backofens angeordnet war.

Die gleichen Vorteile zeigten sich bei der Benutzung auf einem üblichen Holzkohlegrill. Auch hier wurden die Garzeiten reduziert und das Branding verbessert. Insbesondere bei Benutzung in Verbindung mit einem Deckel konnte besonders schnell gegrillt werden mit markantem Branding, während bei einer bekannten Grillpfanne die unter dem Deckel gestaute Feuchtigkeit im Garraum der Pfanne das Gargut feucht werden ließ.

Die obere Auflagefläche jedes Grillstabs kann eine Breite haben, die mindestens das 1,5fache, 2fache, 3fache, 4fache oder 5fache der Breite der unteren Auflagefläche aufweist, oder umgekehrt.

Die obere und/oder die untere Auflagefläche jedes Grillstabs kann scharfkantige Seitenränder aufweisen.

Die Grillstäbe können im Bereich ihrer größten Querschnittsbreite einen abgerundeten Querschnitt aufweisen.

Eine Gesamtoberfläche des Bodens als Summe von Flächenmaßen der oberen und unteren Auflageflächen und von Flächenmaßen von zwischen den Auflageflächen angeordneten Seitenflächen der Grillstäbe ist bevorzugt mindestens gleich groß wie eine Vergleichsoberfläche als Summe von Flächenmaßen der oberen und unteren Auflageebenen innerhalb einer dem von den Grillstäben gebildeten Boden entsprechenden Kontur. Anders ausgedrückt ist die Gesamtoberfläche des Bodens mindestens so groß wie eine entsprechende ebene Platte gleicher Größe, so dass die Wärmeaufnahme durch heiße Luft und/oder Strahlung mindestens ebenso gut ist.

Der Rand kann eine Höhe von mindestens 5%, 10%, 20%, 30% oder 50% einer größten Längen- oder Durchmesserabmessung der Grillpfanne aufweisen, oder mindestens 1 cm, 2 cm, 3 cm, 5 cm oder 10 cm.

Eine Unterseite der Grillpfanne kann zumindest abschnittsweise mit einem in Umfangsrichtung verlaufenden Auflagewulst oder -rand zum Schutz der unteren Auflageflächen versehen sein. Der Auflagerand hat eine geringere Höhe als der Rand und kann entlang des gesamten Umfangs des Bodens durchgehend oder aber abschnittsweise bzw. mit Unterbrechungen verlaufen.

In einer anderen Ausführung vorgesehen sein, dass die Grillpfanne mit einem eine Unterseite des Bodens teilweise umschließenden Rand ausgebildet ist, der ebenso wie der die Oberseite des Bodens teilweise umschließende Rand lediglich über einen Teil des Umfangs umläuft und gegebenenfalls dazu dienen kann, einen Deckel aufzunehmen. Beide Ränder können unterschiedlich oder identisch ausgebildet sein. Insbesondere kann der Boden in der Höhe gesehen in der Mitte der beiden Ränder angeordnet sein, wobei sich ein oberer Rand von der Oberseite des Bodens in gleicher Weise und um eine gleiche Höhe nach oben erstreckt wie ein unterer Rand von einer Unterseite des Bodens nach unten. Die mindestens eine Unterbrechung des Randes kann auf beiden Seiten übereinander liegen oder auch versetzt sein. Der Rand kann an der Ober- bzw. Unterseite der Grillpfanne aufgedickt sein, damit ein ausreichend sicherer Stand gewährleistet wird, wenn der Rand als Standfläche dient.

Der Boden kann entlang mindestens 5%, 10%, 20%, 30% oder 50% seiner Umfangslänge randlos ausgebildet sein.

Es kann vorgesehen sein, dass die Grillpfanne drei-, vier- oder mehreckig mit mehreren Seiten ausgebildet ist, wobei der Rand an mindestens einer Seite ausgebildet ist, während der Boden an mindestens einer Seite randlos ausgebildet ist.

Die Grillpfanne kann rund oder oval ausgebildet sein, wobei der Boden an mindestens einem Umfangsabschnitt randlos ausgebildet ist.

Dort, wo der Boden randlos ausgebildet ist, kann anstelle des Rands ein Auflagebereich parallel oder unter einem Winkel von bis zu 30° zu der Bodenebene angeordnet sein. Der Auflagebereich weist eine Höhe oberhalb des Bodens auf, die geringer ist als die Höhe des Rands, etwa maximal 75%, 50% oder 25% der Höhe des Rands.

Bevorzugt ist vorgesehen, dass die Grillpfanne mit mindestens einem Griff versehen ist, wobei der Griff an dem Boden oder an dem Rand lösbar gehalten sein kann und an einer oder mehreren Stellen des Rands und/oder des Bodens eine Griffaufnahme für den Griff angeordnet sein kann, um den Griff wahlweise an einer von mehreren Stellen an der Grillpfanne lösbar fixieren zu können. Die Grillpfanne kann mit zwei einander gegenüberliegenden Griffen versehen sein, die beide abnehmbar sein können, um die Grillpfanne bequem mit zwei Händen tragen zu können.

Die Erfindung sieht weiterhin vor, dass der mindestens eine Griff wahlweise in einer ersten Orientierung zur Benutzung der Oberseite der Grillpfanne als Garfläche oder in einer um 180° gedrehten Orientierung zur Benutzung der Unterseite der Grillpfanne als Garfläche lösbar an der Grillpfanne fixierbar ist. Dazu kann die Grillpfanne eine oder mehrere symmetrische Griffaufnahme(n) besitzen, die einen passenden Griff in der jeweiligen Position aufnehmen kann (können). Bevorzugt sind zwei einander diametral gegenüberliegende Grillaufnahmen vorgesehen. Eine oder jede Griffaufnahme ist zweckmäßigerweise als Serviergriff zum Halten der Grillpfanne ausgebildet. Jede Griffaufnahme kann eine Breite, von oben gesehen, von mindestens 1 cm und eine Länge, weg vom Boden gesehen, von mindestens 2 cm aufweisen.

Zweckmäßigerweise ist vorgesehen, dass die Grillpfanne einstückig aus Aluminium oder Stahl gegossen ist. Alternativ kann der Boden einstückig gegossen sein und als austauschbares Einsatzteil zum Einsetzen in den Rand ausgebildet sein, wobei die Griffaufnahme(n) in diesem Fall an dem Boden und/oder an dem Rand gehalten bzw. einstückig damit ausgebildet sein können.

Die oder jede Griffaufnahme kann einen runden, ovalen, drei-, vier- oder mehreckigen Querschnitt aufweisen. Sie kann sich in einer Längsrichtung von dem Boden weg oder zu diesem hin verjüngen oder konisch zulaufen, um ein form- und/oder kraftschlüssiges Zusammenwirken mit einem lösbar anzubringenden Griff zu ermöglichen. Die Griffaufnahme kann eine Hinterschneidung in Form eines Lochs, eines Wulsts, einer Vertiefung oder eines Vorsprungs aufweisen. Bevorzugt ist die Griffaufnahme zu beiden Seiten, Ober- und Unterseite, identisch ausgebildet.

In einer weiteren Ausführungsform kann die Grillpfanne rechteckig sein mit seitlich angeordneten horizontalen Aufnahmebereichen für einen geschlossenen Ofen.

Die Grillpfanne kann mit einer Antihaftbeschichtung versehen sein, wobei bevorzugt vorgesehen ist, dass die gesamte Oberfläche der Grillpfanne lückenlos mit einer Antihaftbeschichtung versehen ist.

Beispielsweise können PAEK-Beschichtungen (PEEK, PEK, PEKK, PEKEKK etc.), fluorhaltige Beschichtungen oder PTFE-Beschichtungen verwendet werden. Auch sind Silikonharzbeschichtungen, SolGel-, SiO₂- oder Al₂O₃-Keramikbeschichtungen, Emailbeschichtungen sowie Kombinationen davon möglich.

Die Erfindung wird nachfolgend anhand verschiedener Ausführungsbeispiele erläutert, wobei auf eine Zeichnung Bezug genommen ist, in der
Fig. 1 auf eine Draufsicht einer Ausführungsform einer erfindungsgemäßen Grillpfanne zeigt,
Fig. 2 eine Querschnittsansicht einer Ausführungsform eines Grillstabs zeigt,
Fig. 3 eine Querschnittsansicht einer anderen Ausführungsform eines Grillstabs zeigt,
Fig. 4 eine Querschnittsansicht der Grillpfanne nach Fig. 1 zeigt,
Fig. 5 und 6 Varianten der Ausführuhgsform nach Fig. 1 zeigen,
Fig. 7 eine Ausführungsform zeigt, bei der ausschließlich parallele Grillstäbe vorhanden sind,
Fig. 8a, b, 9a, b und 10a, b Varianten einer weiteren Ausführungsform der Grillpfanne in Seitenansichten und Draufsichten zeigen,
Fig. 11a, b eine Ausführungsform mit drei Lüftungsschlitzen in Seitenansicht und Draufsicht zeigt,
Fig. 12a, b eine Ausführungsform mit einer größeren Anzahl von Lüftungsschlitzen in Seitenansicht und Draufsicht zeigt,
Fig. 13 eine Grillpfanne zeigt, die anstelle eines Griffs mit Auflageelementen versehen ist, die um den Boden herum angeordnet sind,
Fig. 14 eine Querschnittsansicht einer Ausführungsform zeigt, bei der sowohl an einer Oberseite als auch an einer Unterseite des Bodens ein Rand vorgesehen ist,
Fig. 15 eine Querschnittsansicht einer Ausführungsform ähnlich Fig. 14 zeigt, bei der im Bereich eines randlosen Bodenabschnitts ein Auflagebereich vorgesehen ist,
Fig. 16 eine Querschnittsansicht einer Ausführungsform zeigt, bei der anstelle eines Griffs gegenüberliegende Auflageelemente angeordnet sind,
Fig. 17 eine Draufsicht auf eine Grillpfanne mit zwei gegenüberliegenden Griffaufnahmen zeigt,
Fig. 18 eine Griffaufnahme der Grillpfanne nach Figur 17 vergrößert zeigt,
Fig. 19 schematisch die Griffaufnahme nach Figur 18 mit einem angesetzten Griff zeigt,
Fig. 20 die Griffaufnahme nach Figur 19 zeigt, wobei der Griff in eine zur Verriegelung bereite Stellung geschwenkt ist,
Fig. 21 den an der Griffaufnahme fixierten und verriegelten Griff zeigt, und
Fig. 22a-d zwei unterschiedliche Griffe in je zwei Ansichten zeigen.

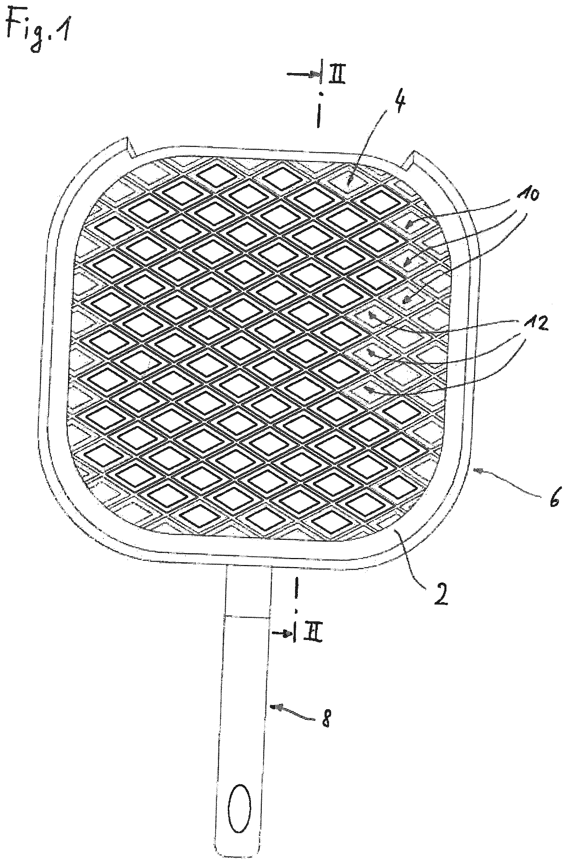

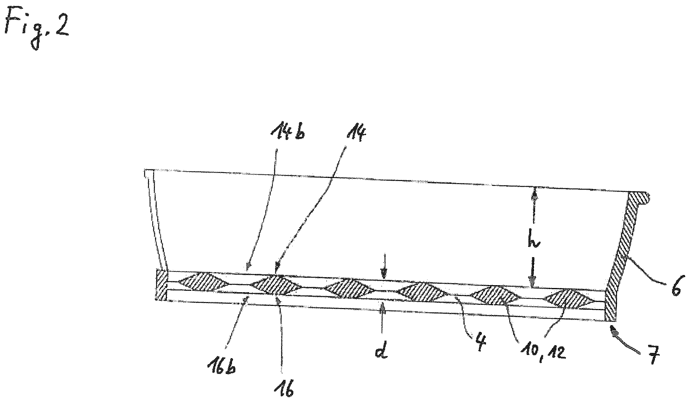

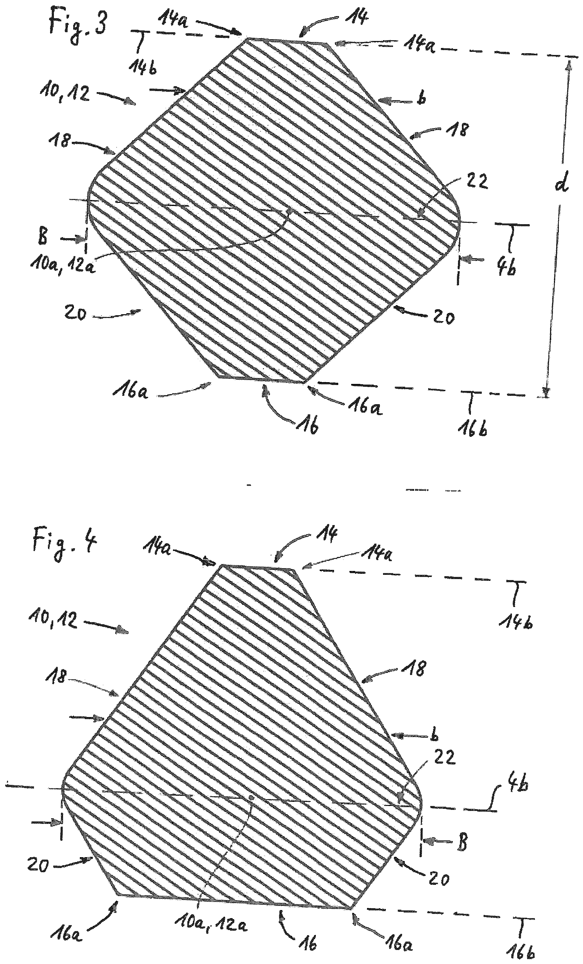

Fig. 1 zeigt eine Draufsicht auf eine erste Ausführungsform einer erfindungsgemäßen Grillpfanne, während Fig. 2 eine Querschnittsansicht dieser Ausführungsform und Fig. 3 und 4 jeweils eine Querschnittsansicht einer Ausführungsform eines Grillstabs der erfindungsgemäßen Grillpfanne zeigen. Die im Ganzen mit 2 bezeichnete Grillpfanne umfasst einen Boden 4, der rostförmig ausgebildet ist, einen den Boden 4 teilweise umschließenden Rand 6 sowie einen Griff 8, der außen an der Grillpfanne 2 am Boden 4 oder am Rand 6 befestigt ist. Der Griff 8 kann fest an der Grillpfanne 2 angebracht sein, ist jedoch bevorzugt abnehmbar, wobei insbesondere vorgesehen ist, dass im abgenommenen Zustand keine Kunststoffteile mehr an der Grillpfanne 2 verbleiben, so dass diese problemlos höheren Temperaturen ausgesetzt werden und bspw. zum Fertiggaren von angegrillten Speisen in einen Backofen eingebracht werden kann.

Weiterhin ist bevorzugt vorgesehen, dass der Griff 8 sowohl in einer ersten Ausrichtung lösbar an der Grillpfanne anbringbar ist, in der eine Oberseite des Griffs in Richtung der Oberseite der Grillpfanne 2 weist, d. h. in der Richtung, in der sich der Rand 6 von dem Boden 4 erstreckt, oder wahlweise in einer um 180° gedrehten zweiten Ausrichtung, in der eine Oberseite des Griffs 8 in Richtung einer Unterseite des Bodens 4 weist, d. h. entgegen der ersten Ausrichtung. Dies hat den Hintergrund, dass die Grillpfanne 2 erfindungsgemäß in zwei Ausrichtungen verwendet werden kann, wobei entweder die in Fig. 1 nach oben weisende Oberseite des Bodens 4 als Auflagefläche für Gargut dient, oder aber die in Fig. 1 nach unten weisende Unterseite des Bodens 4.

In der in Fig. 1 dargestellten Ausführungsform besteht der Boden 4 aus sich kreuzenden Grillstäben, mit einer Anzahl von zueinander parallelen ersten Grillstäben 10 und einer Anzahl von zueinander parallelen zweiten Grillstäben 12, die die ersten Grillstäbe 10 unter einem Winkel von etwa 70° kreuzen. Der Boden 4 mit ersten und zweiten Grillstäben 10, 12 ist vorliegend zusammen mit dem Rand 6 als Gussteil aus Aluminium oder Stahl einstückig ausgebildet.

Fig. 2 zeigt eine Querschnittsansicht der Grillpfanne 2 entlang Linie II-II in Fig. 1, und Fig. 3 zeigt eine Querschnittsansicht eines Grillstabs, bei dem es sich um einen der ersten Grillstäbe 10 und/oder um einen der zweiten Grillstäbe 12 handeln kann. Jeder Grillstab 10, 12 weist eine obere Auflagefläche 14, die in einer oberen Auflageebene 14b verläuft, eine untere Auflagefläche 16, die in einer unteren Auflageebene 16b verläuft, und eine Querschnittsbreite b auf, quer zu einer Längsachse 10a bzw. 12a eines Grillstabs und parallel zu den Auflageebenen gesehen, wobei die Querschnittsbreite b ausgehend von beiden Auflageflächen 14, 16 bis zu einer Mittelposition oder Mittelebene 4b des Grillstabs mit einer größten Querschnittsbreite B zunimmt. Die Mittelposition muss nicht in der Mitte zwischen den Auflageebenen 14b, 16b angeordneten sein, sondern kann sich an einer zweckmäßigen Zwischenposition befinden.

Der Rand 6 der Grillpfanne 2 erstreckt sich ausgehend von dem Boden 4 nach oben und verläuft entlang eines Umfangsrands des Bodens 4, jedoch nicht über den gesamten Umfangsrand, sondern lediglich über einen Teil davon, wobei mindestens 5% einer Umfangslänge des Bodens 4 randlos ausgebildet sind. Fig. 1 zeigt eine viereckige bzw. quadratische Grillpfanne mit abgerundeten Ecken, wobei der Rand 6 an einer Seite ausgespart ist oder mit anderen Worten der Boden 4 an einer Seite randlos ausgebildet ist, wobei es sich in der Draufsicht und bei zu einem Benutzer weisenden Griff 8 um die linke Seite des Bodens handelt.

Zweckmäßigerweise sind die ersten Grillstäbe 10 im Querschnitt identisch wie die zweiten Grillstäbe 12 ausgebildet, wobei Fig. 2 eine Ausführungsform eines Querschnittsprofils der Grillstäbe zeigt. Bezüglich einer Mittelebene 4b, die sich in einem gleichen Abstand von oberer Auflagefläche 14 und unterer Auflagefläche 16 und parallel zu den Auflageebenen 14b, 16b erstreckt, sind die Grillstäbe 10, 12 symmetrisch ausgebildet. Die ebene obere Auflagefläche 14 verläuft parallel zur Mittelebene 4b und hat scharfkantige Seitenränder 14a. Entsprechendes gilt für die untere Auflagefläche 16, die eben ist, parallel bzw. zur Mittelebene 4b verläuft und scharfkantige Seitenränder 16a aufweist.

Ein Auflagerand oder -wulst 7 mit .geringer Höhe, bspw. 2-3 mm ist auf der dem Rand 6 gegenüberliegenden Unterseite des Bodens 4 angeordnet, um die Beschichtung der unteren Auflagefläche 16 zu schützen.

In dieser Ausführungsform weist die obere Auflagefläche 14 eine gleiche Breite auf wie die untere Auflagefläche 16. Jeder Grillstab weist somit einen im Wesentlichen trapezförmigen oberen Querschnittsbereich mit der oberen Auflagefläche 14 und zwei oberen Seiten 18 auf, sowie einen trapezförmigen unteren Querschnittsbereich mit der unteren Auflagefläche 16 und zwei unteren, an die oberen Seiten 18 anschließenden Seiten 20, wobei die jeweilige Basis 22 der Querschnittsbereiche identisch ist und die beiden Querschnittsbereiche unmittelbar aneinander anschließen. Damit ergibt sich eine im Wesentlichen quadratische Querschnittsform der Grillstäbe, mit zwei gegenüberliegenden abgeflachten Eckbereichen und zwei gegenüberliegenden abgerundeten Eckbereichen. In diesem Beispiel sind die oberen Seiten 18 senkrecht zueinander, die unteren Seiten 20 sind senkrecht zueinander und jede obere Seite 18 steht senkrecht zu einer benachbarten unteren Seite 20. Diese Winkelverhältnisse können nach Bedarf variiert werden, wobei die oberen Seiten 18 unter einem Winkel von 150° bis 30° zueinander stehen können, und die unteren Seiten 20 unter einem Winkel zwischen 30° und 150° zueinander stehen können. Benachbarte obere und untere Seiten können unter einem Winkel von 30° bis 150° zueinander stehen.

Fig. 4 zeigt eine Variante einer Querschnittsform eines Grillstabs, bei der eine Breite der unteren Auflagefläche 16 etwa das Dreifache der Breite der oberen Auflagefläche 14 beträgt. Die oberen Seiten 18 stehen unter einem Winkel von ca. 60° zueinander, und die unteren Seiten 20 stehen unter einem Winkel von ca. 60° zueinander. Benachbarte obere und untere Seiten stehen unter einem Winkel von ca. 120° zueinander. Eine Mittelebene 4b des Grillstabs liegt in einem Abstand von der unteren Auflagefläche 16, der etwa einem Drittel des Abstands der unteren Auflagefläche 16 von der oberen Auflagefläche 14 beträgt.

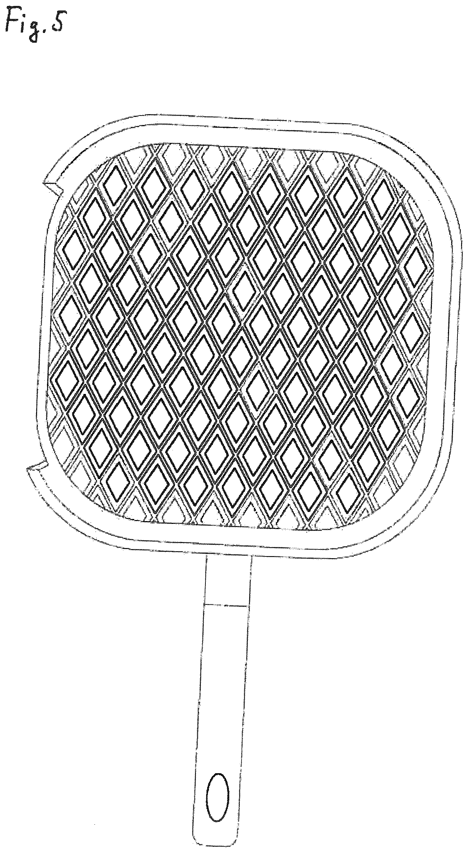

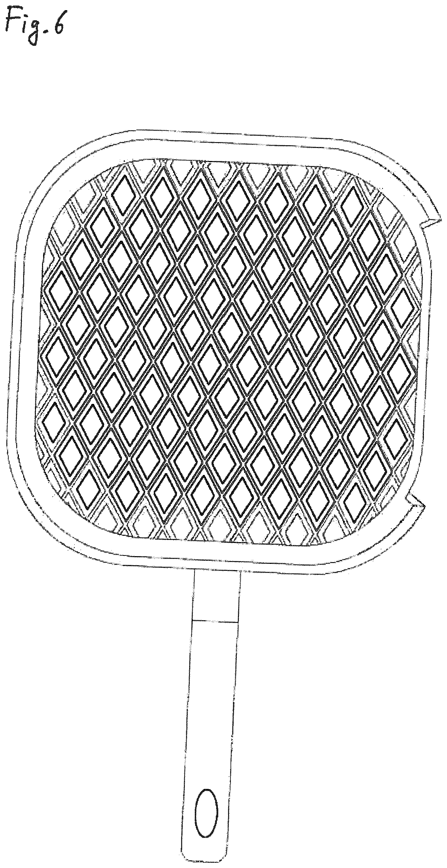

Fig. 5 und 6 zeigen Varianten der Ausführungsform nach Fig. 1, bei denen der Boden 4 an einer dem Griff 8 gegenüberliegenden Seite der Grillpfanne bzw. an einer von oben gesehen rechten Seite der Grillpfanne randlos ausgebildet ist.

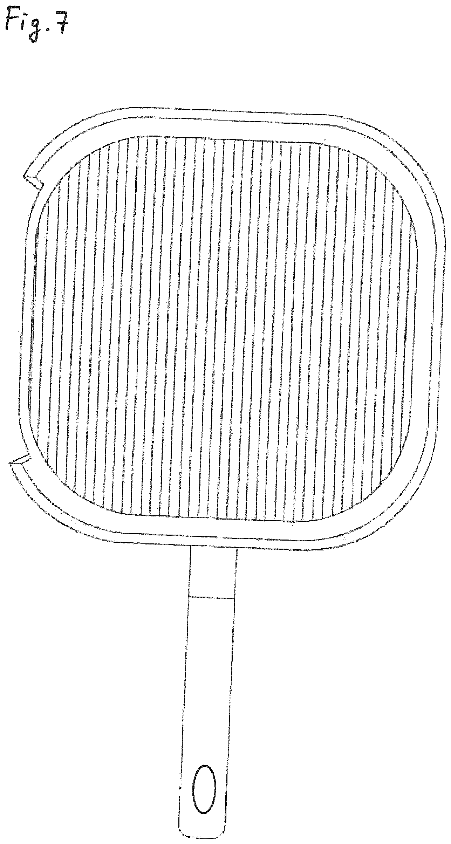

Fig. 7 zeigt eine Ausführungsform, bei der ausschließlich parallel zueinander verlaufende Grillstäbe angeordnet sind, deren Querschnittsform bspw. Fig. 2 oder Fig. 3 entsprechen kann.

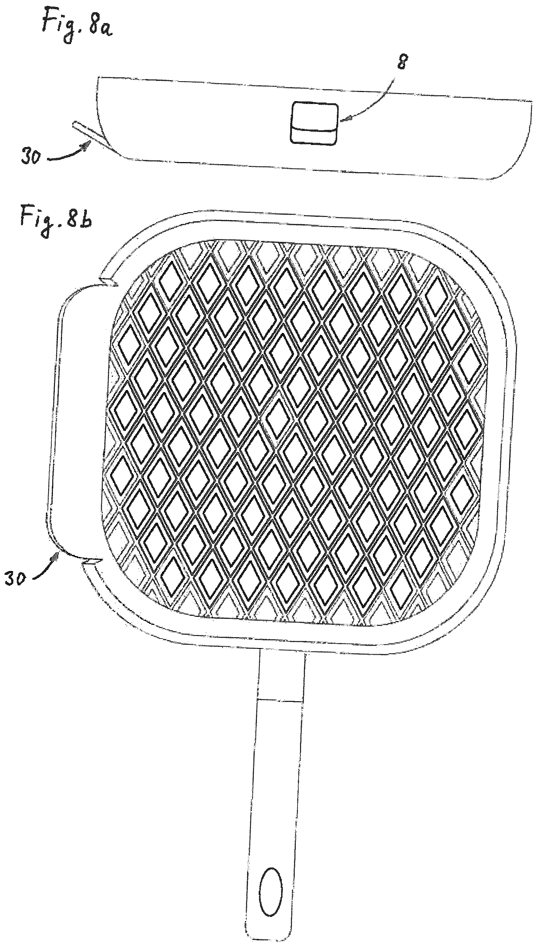

Fig. 8a zeigt eine Seitenansicht und Fig. 8b eine Draufsicht einer weiteren Ausführungsform einer Grillpfanne, bei der ähnlich wie in Fig. 1 eine linke Seite des Bodens 4 randlos ausgebildet ist. Anstelle des Rands ist gemäß Fig. 8a, b ein im Wesentlichen parallel zu den Auflageebenen verlaufender Auflagebereich 30 angeordnet, der gewissermaßen als seitliche Verlängerung des Bodens 4a dient, bspw. zum erleichterten Auflegen von Grillgut oder zum Entleeren der Grillpfanne. Der Auflagebereich 30 kann in einem Winkel von bis zu 30° zu den Auflageebenen angeordnet sein, bspw. unter höchstens 10° oder 20° dazu, und erstreckt sich bis in eine maximale Höhe 30a, die unter einer Höhe h des Rands 6 liegt. Insbesondere erstreckt sich der Auflagebereich lediglich bis zu einer Höhe von 75%, 50% oder 25% der Höhe h des Rands.

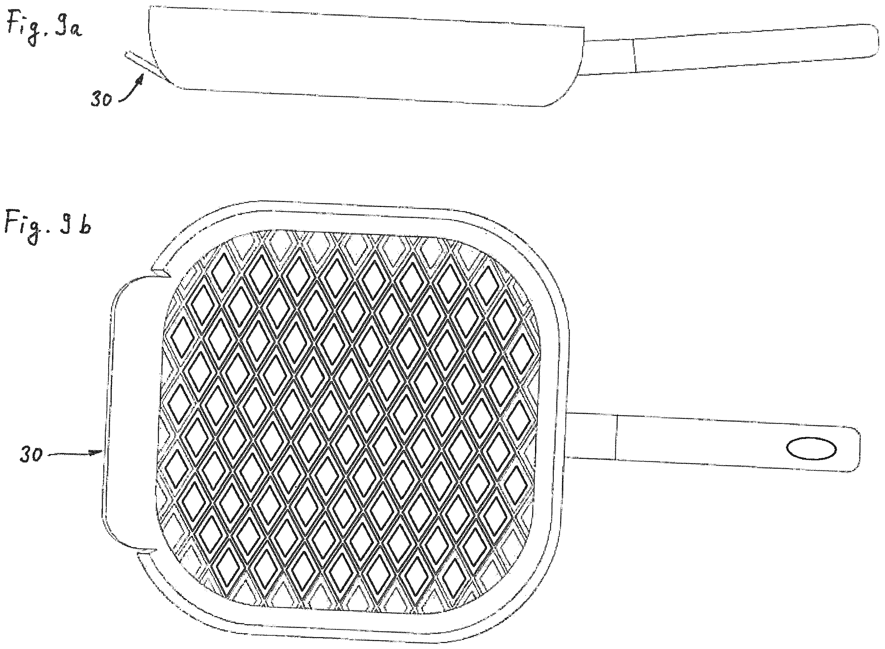

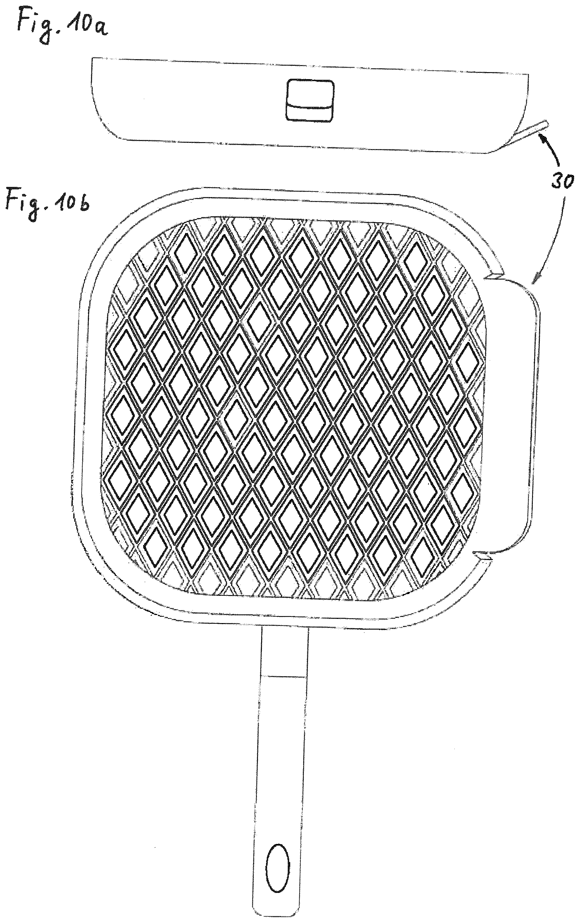

Fig. 9a, b und 10a, b zeigen weitere Varianten, in denen der Auflagebereich 30 an einer dem Griff 8 gegenüberliegenden Seite der Grillpfanne 2 bzw. an einer rechten Seite angeordnet ist.

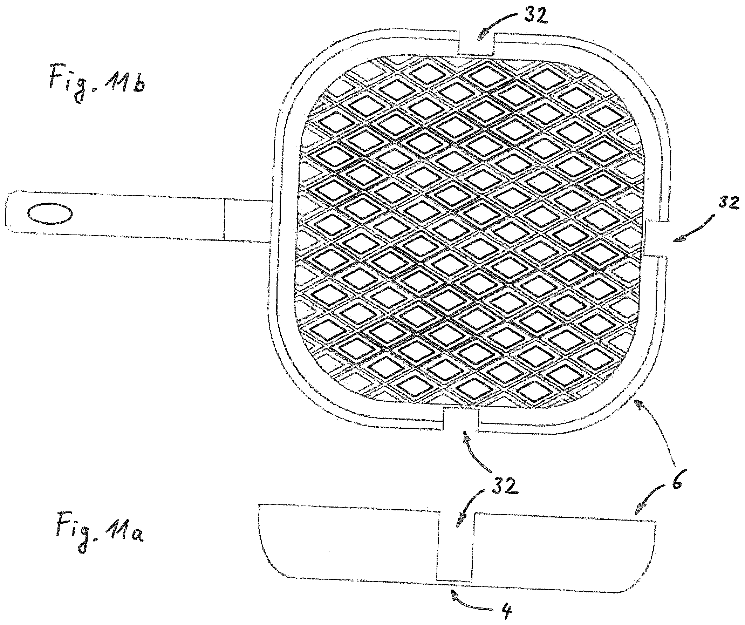

Fig. 11a, b zeigen eine weitere Ausführungsform, bei der eine Anzahl, hierbei 3, von Lüftungsschlitzen 32 in dem Rand 6 gebildet sind. Die Lüftungsschlitze 32 erstrecken sich ausgehend vom Boden 4 über die gesamte Höhe des Rands 6 und dienen insbesondere bei Verwendung der Grillpfanne. 2 mit einem Deckel zur Belüftung, d. h. Zufuhr von Umgebungsluft bzw. Abfuhr von heißer Luft oder Dampf aus dem Innenraum zwischen Boden und Deckel.

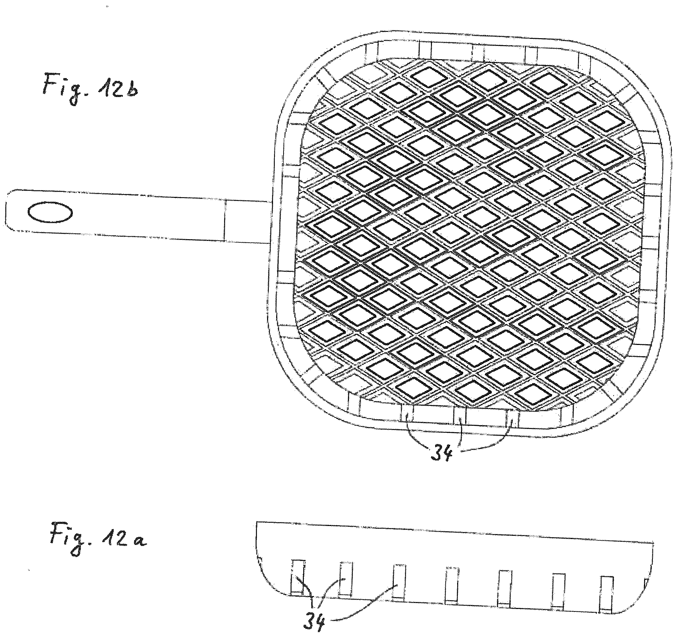

Fig. 12a, b zeigt eine Variante mit Lüftungsschlitzen 34, die sich nicht über die gesamte Höhe des Rands 6 erstrecken, sondern ausgehend vom Boden 4 lediglich über einen Teil der Höhe des Rands 6.

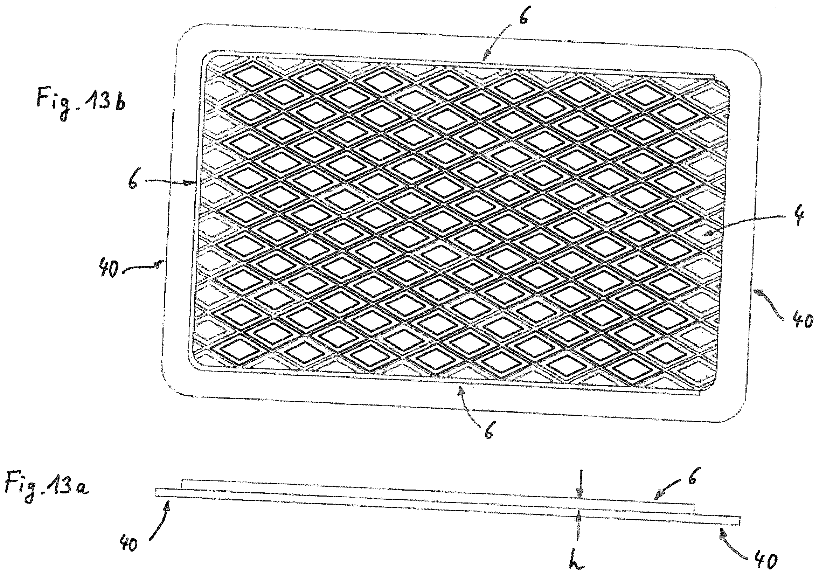

Fig. 13a, b zeigen eine Variante einer erfindungsgemäßen Grillpfanne, bei der anstelle eines Griffs Auflageelemente 40 vorgesehen sind, die seitlich an den Boden 4 oder den Rand 6 anschließen und eine Auflage der Grillpfanne auf seitliche Schienen eines Backofens o. Ä. ermöglichen. In dem Beispiel nach Fig. 13 erstrecken sich die Auflageelemente entlang des gesamten Umfangs des Bodens 4. Alternativ können zwei, vier oder mehr einzelne Auflageelemente über den Umfang verteilt vorgesehen sein. In dieser Ausführung erstreckt sich der Rand 6 entlang drei Seiten der insgesamt rechteckigen Grillpfanne. In einer Variante kann vorgesehen sein, dass der Rand 6 auf beiden Seiten, Oberseite und Unterseite, des Bodens 4 vorgesehen ist.

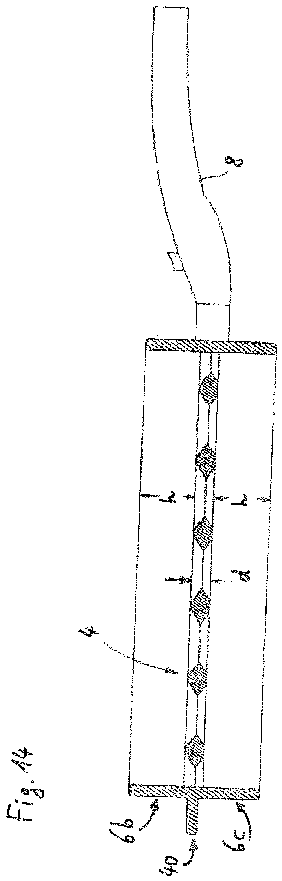

Fig. 14 zeigt eine Querschnittsansicht einer Ausführung mit Griff auf einer Seite und einem Auflageelement 40 auf der gegenüberliegenden Seite, wobei ein Rand (oberer Rand) 6b an einer Oberseite des Bodens 4 und ein Rand (unterer Rand) 6c an einer Unterseite des Bodens 4 angeordnet ist. Beide Ränder 6b, 6c können identisch ausgebildet sein und insbesondere eine gleiche Höhe 6a in Bezug auf den Boden 4 haben.

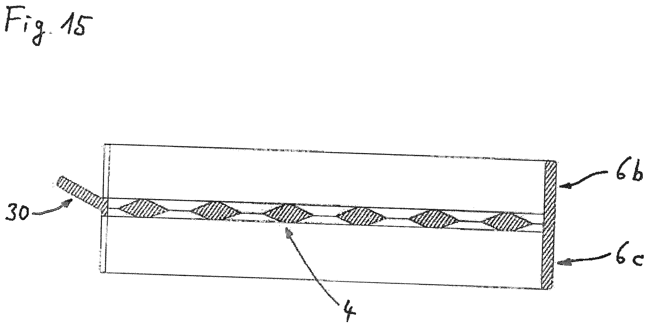

Fig. 15 zeigt eine ähnliche Ausführung ohne Griff und ohne Auflageelemente, wobei der Boden einen randlosen Bereich aufweist, an dem ein Auflagebereich 30 angeordnet ist.

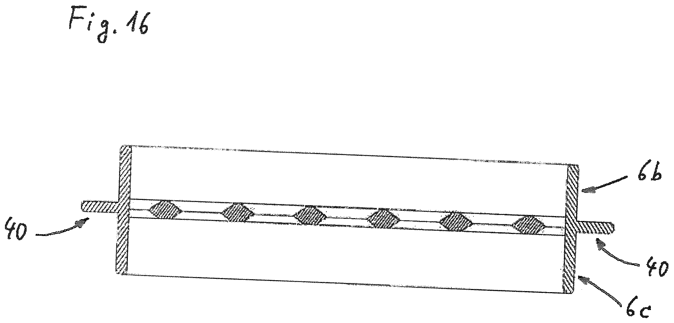

Fig. 16 zeigt eine weitere ähnliche Ausführung wie Fig. 14, bei der anstelle eines Griffs gegenüberliegende Auflageelemente 40 vorgesehen sind.

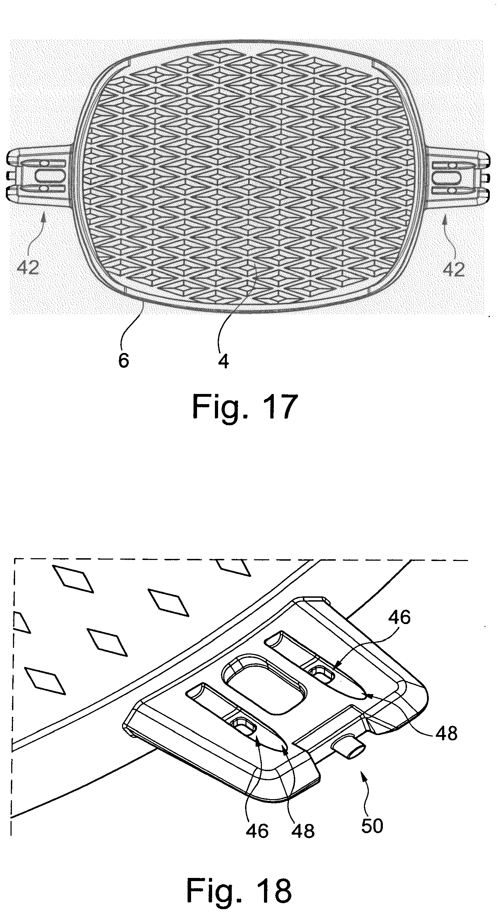

Fig. 17 zeigt eine Grillpfanne in einer Draufsicht mit zwei einander diametral gegenüberliegenden Griffaufnahmen 42, wobei Figur 18 eine vergrößerte Ansicht einer Griffaufnahme 42 zeigt. Die Griffaufnahme 42 ist mit dem Boden 4 bzw. dem Rand 6 einstückig ausgebildet, in diesem Fall einstückig gegossen, wobei dies für beide Griffaufnahmen 42 gilt, und wobei die Grillpfanne und beide Griffaufnahmen allseitig mit einer Beschichtung versehen sind.

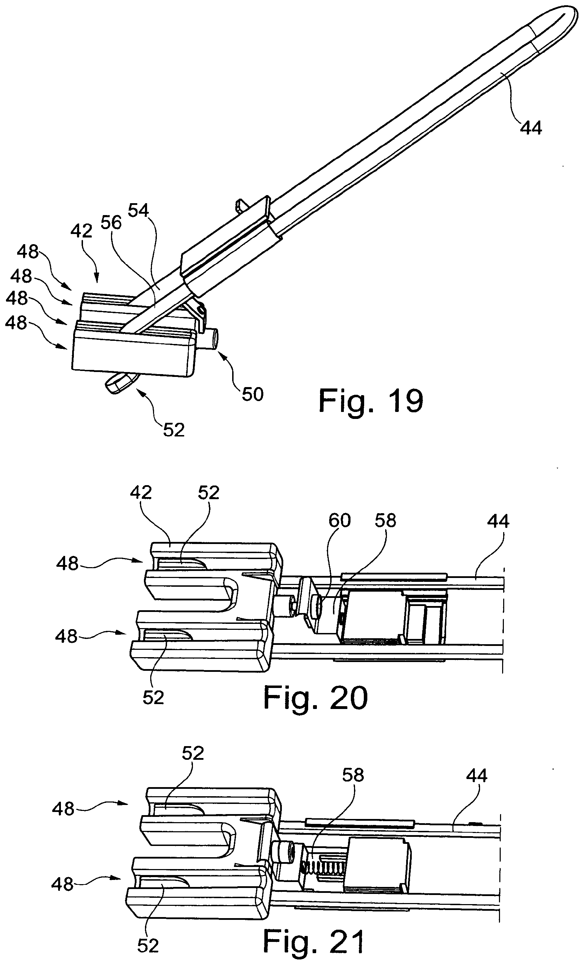

Die Griffaufnahmen 42 sind von oben und unten gesehen gleich ausgebildet, so dass jede Griffaufnahme 42 in Bezug auf eine diese mittig durchlaufende Mittelebene, die parallel zum Boden verläuft, symmetrisch ausgebildet ist. Dies ermöglicht eine Fixierung eines Griffs 44, der in Fig. 19 bis 21 dargestellt ist, von oben und von unten, so dass die Grillpfanne mit dem Griff in beiden Gebrauchspositionen verwendbar ist (Oberseite oder Unterseite dient als Grillfläche). Weiterhin sind die Griffaufnahmen 42 ausreichend groß ausgebildet, um als Serviergriffe genutzt zu werden, wobei sie eine Länge, vom Boden weg gesehen, von mindestens 2 cm, bevorzugt, mindestens 3 cm, 4 cm, 5 cm, 7 cm oder 10 cm, und eine quer dazu verlaufende Breite von mindestens 1 cm, bevorzugt mindestens 2 cm, 3 cm, 4 cm oder 5 cm aufweisen.

Jede Griffaufnahme 42 weist mindestens eine Hinterschneidung auf, in diesem Fall in Form von zwei Löchern 46 und insgesamt vier, je zwei oben und unten, parallel zueinander und in Längsrichtung der Griffaufnahme verlaufenden länglichen Vertiefungen 48, die eine formschlüssige, lösbare Anbringung eines Griffs 44 ermöglichen. Zur Verriegelung des Griffs 44 weist jede Griffaufnahme 42 weiterhin einen zapfenförmigen Verriegelungsvorsprung 50 auf.

Der Griff 44 weist zwei z-förmig abgewinkelte Endabschnitte 52 auf, die in die Löcher 46 einführbar sind, wobei zwei zueinander parallele Halterungsabschnitte 54, 56 auf gegenüberliegenden Seiten der Griffaufnahme 42 in den Vertiefungen 48 aufnehmbar sind, indem der Griff nach dem Einsetzen der Endabschnitte 52 in die Löcher 46 verschwenkt wird. Der Griff 44 weist weiterhin ein längsverschieblich und in Richtung der Endabschnitte 52 federbelastetes Verriegelungselement 58 auf, das eine Öffnung 60 besitzt, in der der Verriegelungsvorsprung 50 aufnehmbar ist.

Fig. 20 zeigt das Verriegelungselement 58 in einer gegen die Federkraft von der Griffaufnahme 42 und dem Verriegelungsvorsprung 50 beabstandeten Position, während Fig. 21 die mit dem Verriegelungsvorsprung 50 in Eingriff gekommene Verriegelungsstellung des Verriegelungselements 58 zeigt, in der auch der Griff 44 fest an der Griffaufnahme 42 fixiert ist. Ersichtlich kann der Griff in einer um 180° gedrehten Orientierung an der Griffaufnahme 42 fixiert werden, so dass die Grillpfanne in beiden Orientierungen verwendet werden kann.

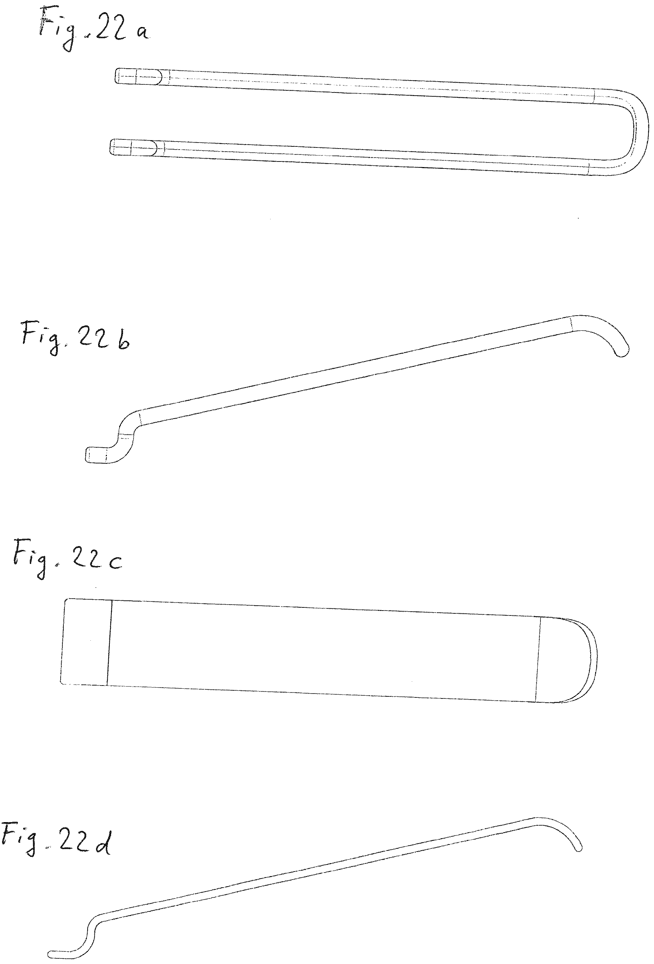

Figur 22 zeigt zwei unterschiedliche Griffe in zwei Ansichten, nämlich einerseits den vorstehend beschriebenen Griff 44 (ohne Verriegelungselement), und andererseits einen aus Blech gebogenen oder geprägten Griff, der an seinem vorderen, zum Eingriff in die Griffaufnahme der Grillpfanne dienenden Ende lediglich einen einheitlichen Halterungsabschnitt aufweist.

### Bezugszeichenliste

- 2: Grillpfanne
- 4: Boden
- 4b: Mittelebene, Mittelposition
- 6: Rand
- 6b: oberer Rand
- 6c: unterer Rand
- 7: Auflagerand
- 8: Griff
- 10: erster Grillstab
- 10a: Längsachse
- 12: zweiter Grillstab
- 12a: Längsachse
- 14: obere Auflagefläche
- 14a: Seitenrand
- 14b: obere Auflageebene
- 16: untere Auflagefläche
- 16a: Seitenrand
- 16b: untere Auflageebene
- 18: obere Seite
- 20: untere Seite
- 22: Basis
- 30: Auflagebereich
- 30a: Höhe (von 30)
- 32: Lüftungsschlitz
- 34: Lüftungsschlitz
- 40: Auflageelement
- 42: Griffaufnahme
- 44: Griff
- 46: Loch
- 48: Vertiefung
- 50: Verriegelungsvorsprung
- 52: Endabschnitt
- 54, 56: Halterungsabschnitt
- 58: Verriegelungselement
- 60: Öffnung
- b: Querschnittsbreite
- B: größte Querschnittsbreite
- d: Dicke (von 4)
- h: Höhe (von 6)

## Patentansprüche

1. Grillpfanne (2) mit einem rostförmig mit Grillstäben (10, 12) ausgebildeten Boden (4) und einem den Boden (4) teilweise umschließenden Rand (6), wobei jeder Grillstab (10, 12) eine ebene obere Auflagefläche (14) und eine ebene untere Auflagefläche (16) aufweist, wobei die oberen Auflageflächen (14) in einer oberen Auflageebene (14b) und die unteren Auflageflächen (16) in einer unteren Auflageebene (16b) verlaufen, wobei jeder Grillstab (10, 12) eine Querschnittsbreite (b), quer zu einer Längsachse (10a, 12a) des Grillstabs (10, 12) und parallel zu den Auflageebenen (14b, 16b) gesehen, aufweist, wobei die Querschnittsbreite (b) ausgehend von jeder Auflagefläche (14, 16) bis zu einer Mittelposition (4b) mit einer größten Querschnittsbreite (B) zunimmt, und wobei der Rand (6) eine Höhe (h) besitzt, die mindestens so groß ist wie eine Dicke (d) des Bodens (4) als gegenseitiger Abstand der oberen und unteren Auflageebenen (14b, 16b).

2. Grillpfanne nach Anspruch 1, **dadurch gekennzeichnet, dass** der Boden (4) einander kreuzende Grillstäbe (10, 12) umfasst, mit einer Anzahl von zueinander parallelen ersten Grillstäben (10) und einer Anzahl von zueinander parallelen zweiten Grillstäben (12), die unter einem Winkel von 15° bis 90° zu den ersten Grillstäben angeordnet sind.

3. Grillpfanne nach Anspruch- 1 oder 2, **dadurch gekennzeichnet, dass** die obere Auflagefläche (14) jedes Grillstabs (10, 12) eben ist und eine Breite von mindestens 5%, 10%, 20%, 30%, 40% oder 50% der Dicke (d) des Bodens (4) aufweist.

4. Grillpfanne nach einem der vorangehenden Ansprüche, **dadurch gekennzeichnet, dass** die untere Auflagefläche (16) eines jeden Grillstabs (10, 12) eben ist und eine Breite von mindestens 5%, 10%, 20%, 30%, 40% oder 50% der Dicke (d) des Bodens (4) aufweist.

5. Grillpfanne nach einem der vorangehenden Ansprüche, **dadurch gekennzeichnet, dass** eine Querschnittsbreite (b) jedes Grillstabs (10, 12) ausgehend von jeder Auflagefläche (14, 16) linear zunimmt.

6. Grillpfanne nach einem der vorangehenden Ansprüche, **dadurch gekennzeichnet, dass** die obere Auflagefläche (14) jedes Grillstabs (10, 12) eine Breite hat, die mindestens das 1,5-fache, 2-fache, 3-fache, 4-fache oder 5-fache einer Breite der unteren Auflagefläche (16) aufweist, oder umgekehrt.

7. Grillpfanne nach einem der vorangehenden Ansprüche, **dadurch gekennzeichnet, dass** eine Unterseite der Grillpfanne (2) zumindest abschnittsweise mit einem in Umfangsrichtung verlaufenden Auflagewulst oder Auflagerand (7) versehen ist.

8. Grillpfanne nach einem der Ansprüche 1 bis 6, **dadurch gekennzeichnet, dass** eine Unterseite der Grillpfanne (2) mit einem den Boden (4) teilweise umschließenden unteren Rand (6c) versehen ist, der eine Höhe (h) besitzt, die mindestens so groß ist wie die Dicke (d) des Bodens (4).

9. Grillpfanne nach einem der vorangehenden Ansprüche, **dadurch gekennzeichnet, dass** an dem Boden (4) und/oder dem Rand (6) mindestens ein Auflageelement (40) etwa zur Halterung in einem Backofen gehalten ist.

10. Grillpfanne nach einem der vorangehenden Ansprüche, **dadurch gekennzeichnet, dass** sich die Mittelposition (4b) mittig zwischen den Auflageebenen (14b, 16b) oder an einer Position von 10 % bis 90 % des gegenseitigen Abstands der Auflageebenen (14b, 16b) befindet.

11. Grillpfanne nach einem der vorangehenden Ansprüche, **dadurch gekennzeichnet, dass** eine Gesamtoberfläche des Bodens (4) als Summe von Flächenmaßen der oberen und unteren Auflageflächen (14, 16) und von Flächenmaßen von zwischen den Auflageflächen (14, 16) angeordneten Seitenflächen der Grillstäbe (10, 12) mindestens gleich groß wie eine Vergleichsoberfläche ist, die sich als- Summe von Flächenmaßen der oberen und unteren Auflageebenen (14b, 16b) innerhalb einer dem von den Grillstäben (10,12) gebildeten Boden (4) entsprechenden Kontur ergibt.

12. Grillpfanne nach einem der vorangehenden Ansprüche, **dadurch gekennzeichnet, dass** die Grillpfanne mindestens eine Griffaufnahme (42) oder zwei einander gegenüberliegende Griffaufnahmen (42) aufweist, die an einer oder mehreren Stellen des Rands (6) und/oder des Bodens (4) angeordnet ist (sind) und an der (denen) mindestens ein Griff (44) lösbar fixiert werden kann.

13. Grillpfanne nach Anspruch 12, **dadurch gekennzeichnet, dass** mindestens eine Griffaufnahme (42) eine Hinterschneidung in Form eines Lochs (46), eines Wulsts, einer Vertiefung (48) oder eines Vorsprungs aufweist (50).

14. Grillpfanne nach Anspruch 13, **dadurch gekennzeichnet, dass** mindestens eine Griffaufnahme (42) von der Oberseite und von der Unterseite gesehen identisch ausgebildet ist, um eine Fixierung eines Griffs in zwei Gebrauchspositionen zu ermöglichen.

15. Pfannenanordnung mit einer Grillpfanne nach einem der vorangehenden Ansprüche, mit einem auf den Rand (6) passenden Deckel, wobei dort, wo der Boden (4) randlos ausgebildet ist, mindestens ein Lüftungsbereich oder Lüftungsschlitz (32, 34) gebildet ist.

## Claims

1. Griddle pan (2) comprising a base (4) formed in a grid pattern with griddle bars (10, 12) and a rim (6) partly enclosing the base (4), each griddle bar (10, 12) having an even upper support surface (14) and an even lower support surface (16), wherein the upper support surface (14) runs in an upper support plane (14b) and the lower support surface (16) runs in a lower support plane (16b), each griddle bar (10, 12) having a cross-sectional width (b), seen transversely to a longitudinal axis (10a, 12a) of the griddle bar (10, 12) and parallel to the support planes (14b, 16b), wherein the cross-sectional width (b) increases starting from each support surface (14, 16) up to a central position (4b) with a maximum cross-sectional width (B), and wherein the rim (6) has a height (h), which is at least as great as a thickness (d) of the base (4) being a mutual distance of the upper and lower support planes (14b, 16b).

2. Griddle pan according to claim 1, **characterized in that** the base (4) includes griddle bars (10, 12) crossing each other, with a number of first griddle bars (10) parallel to each other and a number of second griddle bars (12) parallel to each other that are arranged at an angle of 15° to 90° to the first griddle bars.

3. Griddle pan according to claim 1 or 2, **characterized in that** the upper support surface (14) of each griddle bar (10, 12) is even and has a width of at least 5%, 10%, 20%, 30%, 40% or 50% of the thickness (d) of the base (4).

4. Griddle pan according to one of the preceding claims, **characterized in that** the lower support surface (16) of each griddle bar (10, 12) is even and has a width of at least 5%, 10%, 20%, 30%, 40% or 50% of the thickness (d) of the base (4).

5. Griddle pan according to one of the preceding claims, **characterized in that** a cross-sectional width (b) of each griddle bar (10, 12) increases linearly starting from each support surface (14, 16).

6. Griddle pan according to one of the preceding claims, **characterized in that** the upper support surface (14) of each griddle bar (10, 12) has a width, which is at least 1.5-times, double, triple, quadruple or 5-times the width of the lower support surface (16), or in reverse.

7. Griddle pan according to one of the preceding claims, **characterized in that** a bottom of the griddle pan (2) is provided at least in sections with a support bulge or a support rim running in the circumferential direction (7).

8. Griddle pan according to one of claims 1 to 6, **characterized in that** a bottom of the griddle pan (2) is provided with a lower rim (6c) partly enclosing the base (4), which has a height (h), which is at least as large as the thickness (d) of the base (4).

9. Griddle pan according to one of the preceding claims, **characterized in that** at least one support member (40) is mounted on the base (4) and/or the rim (6) for instance for holding in a baking-oven.

10. Griddle pan according to one of the preceding claims, **characterized in that** the central position (4b) is located centrally between the support planes (14b, 16b) or at a position which is 10% to 90% of the mutual distance of the support planes (14b, 16b).

11. Griddle pan according to one of the preceding claims, **characterized in that** a total surface of the base (4) being a sum of area measures of the upper and lower support surfaces (14, 16) and of area measures of sides of the griddle bars (10, 12), arranged between the support surfaces (14, 16), is at least equally large as a comparison surface, which being a sum of area measures of the upper and lower support planes (14b, 16b) is evident within a contour corresponding to the base (4) formed by the griddle bars (10, 12).

12. Griddle pan according to one of the preceding claims, **characterized in that** the griddle pan has at least one grip unit (42) or two grip units (42) lying opposite each other, which is (are) arranged at one or more places of the rim (6) and/or the base (4) and to which at least one handle (44) can be detachably fixed.

13. Griddle pan according to claim 12, **characterized in that** at least one grip unit (42) has an undercut in the form of a hole (46), a bulge, a recess (48) or a protrusion (50).

14. Griddle pan according to claim 13, **characterized in that** at least one grip unit (42) seen from the bottom and from the top is identically formed, so that a handle can be fixed in two positions of use.

15. Pan arrangement with a griddle pan according to one of the preceding claims, with a cover fitting the rim (6), at least one ventilation region or louvre (32, 34) being formed there where the base (4) is embodied without a rim.

## Revendications

1. Une poêle à griller (2) comportant un fond (4) épousant un profil en forme de grill avec des barres de grill (10, 12) et une bordure (6) qui enferme partiellement le fond (4), et chaque barre de grill (10, 12) a une surface supérieure de support plate (14) et une surface inférieure de support plate (16), et la surface supérieure de support (14) suit un plan supérieur de support (14b) alors que la surface inférieure de support (16) suit un plan inférieur de support (16b), et chaque barre de grill (10, 12) a une largeur en coupe (b) qui se situe à la transversale d'un axe longitudinal (10a, 12a) de la barre de grill (10, 12) et est parallèle aux plans de support (14b, 16b), et la largeur en coupe (b) augmente entre, d'une part, chaque surface de support (14, 16) et, d'autre part, une position centrale (4b), avec une largeur en coupe maximale (B), et la bordure (6) a une hauteur (h) qui est égale ou supérieure à une épaisseur (d) du fond (4) et correspond à une distance mutuelle des plans supérieur et inférieur de support (14b, 16b).

2. La poêle à griller que décrit la revendication 1, et qui se **caractérise par le fait que** le fond (4) comporte des barres de grill (10, 12) qui se croisent, avec un certain nombre de premières barres de grill (10), qui sont parallèles les unes aux autres, et un certain nombre de deuxièmes barres de grill (12) qui sont parallèles les unes aux autres et qui sont disposées à un angle compris entre 15 et 90° par rapport aux premières barres de grill.

3. La poêle à griller que décrit la revendication 1 ou 2, et qui se **caractérise par le fait que** la surface supérieure de support (14) de chaque barre de grill (10, 12) est plate et a une largeur qui est égale ou supérieure à 5, 10, 20, 30, 40 ou 50% de l'épaisseur (d) du fond (4).

4. La poêle à griller que décrit l'une ou l'autre des revendications précédentes, et qui se **caractérise par le fait que** la surface inférieure de support (16) de chaque barre de grill (10, 12) est plate et a une largeur qui est égale ou supérieure à 5, 10, 20, 30, 40 ou 50% de l'épaisseur (d) du fond (4).

5. La poêle à griller que décrit l'une ou l'autre des revendications précédentes, et qui se **caractérise par le fait qu'**une largeur transversale (b) de chaque barre de grill (10, 12) augmente de manière linéaire depuis chaque surface de support (14, 16).

6. La poêle à griller que décrit l'une ou l'autre des revendications précédentes, et qui se **caractérise par le fait que** la surface supérieure de support (14) de chaque barre de grill (10, 12) a une largeur qui est au moins 1,5, deux, trois, quatre ou cinq fois supérieure à la largeur de la surface inférieure de support (16), ou inversement.

7. La poêle à griller que décrit l'une ou l'autre des revendications précédentes, et qui se **caractérise par le fait qu'**un fond de la poêle à griller (2) comporte au moins plusieurs sections qui ont un renflement de soutien ou une bordure de support dans le sens de la circonférence (7).

8. La poêle à griller que décrit l'une ou l'autre des revendications 1 à 6, et qui se **caractérise par le fait qu'**un fond d la poêle à griller (2) comporte une bordure inférieure (6c) qui enferme partiellement le fond (4), qui a une hauteur (h) qui est égale ou supérieure à l'épaisseur (d) du fond (4).

9. La poêle à griller que décrit l'une ou l'autre des revendications précédentes, et qui se **caractérise par le fait qu'**au moins un accessoire de support (40) vient se fixer sur le fond (4) et (ou) la bordure (6) ; par exemple, pour l'immobiliser dans un four de cuisson.

10. La poêle à griller que décrit l'une ou l'autre des revendications précédentes, et qui se **caractérise par le fait que** la position centrale (4b) se trouve au centre, entre les plans de support (14b, 16b) ou à un emplacement qui se situe entre 10% et 90% de la distance mutuelle des plans de support (14b, 16b).

11. La poêle à griller que décrit l'une ou l'autre des revendications précédentes, et qui se **caractérise par le fait qu'**une surface totale du fond (4), qui correspond à une somme des mesures de superficie des surfaces supérieure et inférieure de support (14, 16) et des mesures de superficie des flancs des barres du grill (10, 12), implantées entre les surfaces de support (14, 16), est égale ou supérieure à une surface de comparaison qui, correspondant à une somme de mesures de superficies des plans supérieur et inférieur de support (14b, 16b), est évidente à l'intérieur d'un contour qui correspond au flanc (4) formé par les barres de grill (10, 12).

12. La poêle à griller que décrit l'une ou l'autre des revendications précédentes, et qui se **caractérise par le fait que** cette poêle à griller a au moins un accessoire de saisie (42) ou deux accessoires de saisie (42) qui se font face et qui est ou sont disposé(s) à au moins un emplacement de la bordure (6) et (ou) du fond (4) et sur lequel ou lesquels vient se fixer au moins une poignée (44) détachable.

13. La poêle à griller que décrit la revendication 12, et qui se **caractérise par le fait qu'**au moins un accessoire de saisie (42) a un chambrage qui se présente sous la forme d'un trou (46), d'un renflement, d'un creux (48) ou d'une partie saillante (50).

14. La poêle à griller que décrit la revendication 13, et qui se **caractérise par le fait qu'**au moins un accessoire de saisie (42), vu du dessous et du dessus, a une forme identique afin de pouvoir fixer la poignée à deux emplacements opérationnels.

15. Un agencement à poêle qui se compose d'une poêle à griller et que décrit l'une des revendications précédentes, avec un couvercle qui vient se fixer sur la bordure (6), au moins une zone ou ouïe de ventilation (32, 34) à l'emplacement où le fond (4) vient s'intégrer, sans bordure.
